Europäisches Patentamt

**European Patent Office**

Office européen des brevets

(19)

(11) Publication number: **0 024 100**
**A2**

(12) **EUROPEAN PATENT APPLICATION**

(21) Application number: **80302056.9**

(22) Date of filing: **18.06.80**

(51) Int. Cl.³: **F 16 H 1/42**
**B 60 K 17/16**

(30) Priority: **20.08.79 US 68241**

(43) Date of publication of application:
**25.02.81 Bulletin 81/8**

(84) Designated Contracting States:
**BE DE FR GB IT SE**

(71) Applicant: **CATERPILLAR TRACTOR CO.**
**100 Northeast Adams Street**
**Peoria Illinois 61629(US)**

(72) Inventor: **Coutant, Alan Robert**
**13417 N.Dover Lane**
**Chillicothe Illinois 61523(US)**

(74) Representative: **Jackson, Peter Arthur et al,**
**GILL JENNINGS & EVERY 53 to 64, Chancery Lane**
**London WC2A 1HN(GB)**

(54) **Transmission.**

(57) A transmission (10) has first, second and third motion transmitting members (12,14,16) which initiate driving direction, such as forward or reverse, control output speed and maintain differential operation of the transmission, respectively. In space critical applications, such as small utility tractors, for example, transmission size must be kept to a minimum to accommodate accessories and reduce overall tractor dimensions. In the transmission (10), the third member (16) or differential is carried by a support member (36), such as a shaft (66), and drives output elements (24,26) connected to tractor axles. The second member (14), controlling axle speed, is positioned about and longitudinally along an axis (40) of the support member (36) and drives the third member (16). Driving direction is initiated by controlling rotational input through the first member (12) to drive the second member (14). Thus, the transmission (10) is made compact by closely positioning the speed control and differential portions relative to one support member (36), such as the shaft (66), in the transmission (10).

./...

FIG.1

- 1 -

CATERPILLAR TRACTOR CO.                    GJE 5080/082

## TRANSMISSION

The invention relates to a transmission for receiving a rotational input and controllably delivering a rotational output.

In the use of a transmission mechanism, it is desirable to include portions for initiating driving direction of the transmission, such as forward or reverse; for controlling output speed selection; and for acting as a differential, in one housing. Such a mechanism, commonly referred to as a transaxle, can afford maximum space utilization in space critical locations, as well as providing flexibility and serviceability in many different applications.

A differential, as is commonly known, allows different speeds and torques to be applied through one wheel or output relative to another. This permits a wheeled vehicle to be turned about one wheel which essentially becomes fixed while the other wheel moves around the fixed wheel. One example of such a transaxle is described in U.S. Patent Specification No.1,395,668. The transaxle disclosed uses planetary gear assemblies which receive rotational input through a shaft driven at one of two transmission speeds. Forward or reverse is selected by controllably braking a ring gear of a preselected planetary assembly. Differential action is taken through or across counter-rotating shafts which, in effect, "brake" the ring gears of the forward planetary assemblies while permitting relative rotation therebetween. A differential utilizing a single planetary gear assembly is disclosed in U.S. Patent Specification No. 3,323,389. A differential having two planetary gear assemblies tied one to the other but resulting in oppositely rotating output elements is disclosed in Gear Trains by H.E. Merritt which was published in 1947 by Sir Isaac Pitman & Sons Ltd.

Power trains for track-laying tractors are disclosed in U.S. Patent Specifications Nos 3,425,296 and 3,538,790. However, although differentials are not normally used in track-laying vehicles, they may be incorporated in certain instances, particularly to provide spot turning action in a tracked vehicle. Such mechanisms are disclosed in U.S. Patent Specifications Nos.3,044,320 and 3,535,954.

For example, such a transmission mechanism or transaxle is sometimes necessary on utility tractors, owing to the space limitations inherent in such vehicles. It is particularly desirable to minimize the length of the transmission to permit the use of a variety of engines or accessories on the vehicle. Such flexibility might not otherwise be possible with a conventional drive train in which forward and reverse and the desired speeds are selected in and transmitted from a transmission through a driveshaft to a differential and out to each of the driven wheels.

Heretofore, transmissions which have also incorporated a differential, thus eliminating the external drive shaft, as such, have still maintained the "line up" of components found in the more conventional drive trains. In other words, such transmissions have commonly received rotational input from an engine to that portion of the transmission in which forward and reverse selection is made. Forward and reverse selection provides rotational input in a preselected sense to drive that portion of the transmission in which the selection of speeds is made. Rotational output after speed selection then drives the differential portion of the transmission from which the wheels are driven through axles connected to the differential. The "line up" necessitates three distinct portions or stages in the transmission, each supported or acting rotatably about three separate shafts. This results in increased length and additional components in the transmission owing to the relationship of the various components and use of the three shafts.

In accordance with the present invention, a transmission for receiving a rotational input and controllably delivering a rotational output through first and second output elements comprises a housing having a first motion transmitting member for controlling driving direction of the transmission output, a second motion transmitting member for controlling output speed of the transmission, and a third motion transmitting member for allowing differential operation of the transmission characterised in that the transmission further comprises a first support member having an axis and being carried by the housing, the first motion transmitting member being arranged to drive, in use, the second motion transmitting member in response to receiving a rotational input, the third motion transmitting member being carried by the first support member and being arranged, in use, to transmit a rotational output to the first and second output elements and to allow differential rotation between the first and second output elements; and the second motion transmitting member being positioned about the axis of the first support member to drive, in use, the third motion transmitting member.

This arrangement particularly the positioning of the second motion transmitting member about the first support member which carries the third motion transmitting member provides a more compact transmission by eliminating the "line up" of components about the three shafts and minimizes the length and number of components in the transmission. It also provides the components in such a relationship that additional modes of operation of the transmission, such as more speeds, may be conveniently added.

In this context the term "member" in the phrases first, second and third motion transmitting member means a part or number of cooperating parts.

The third motion transitting member may comprise a planetary gear assembly carried by the first support member, or first and second differential portions comprising first and second planetary gear assemblies respectively.

This construction is particularly useful, in small vehicles, such as utility tractors, where space is frequently limited. A conventional drive train which utilizes a separate differential from the transmission commonly requires too much space longitudinally in the tractor. Thus, a transmission which incorporates the differential, as well as the driving direction, or forward and reverse initiation, and output driving speed selection is sometimes used to replace the conventional drive train. In the new arrangement the portions of the transmission which initiate driving direction and are adaptable to select output speed are associated with and positioned relative to one support member in the transmission to further reduce the dimensions of the transmission for space critical applications.

- 5 -

Preferably, the second motion transmitting member is carried coaxially about the first support member.

Some examples of transmissions in accordance with the present invention are illustrated in the accompanying schematic drawings, in which:-

Figure 1 illustrates an example having two-speed and forward-reverse selection;

Figure 2 illustrates an example having a single speed and forward-reverse selection;

Figure 3 illustrates another example having two-speed and forward-reverse selection;

Figure 4 illustrates an example having four-speed and forward-reverse selection; and,

Figure 5 illustrates another example having a single speed and forward-reverse selection.

Referring to the drawings, a transmission 10 is shown which has first, second and third motion transmitting members 12,14,16, associated with a housing 18 of said transmission. Alternate embodiments of the transmission are shown by schematic representations in the drawings. For convenience, an overall relationship of the first, second and third motion transmitting members and the portions of the transmission which they represent will first be generally discussed followed by a more detailed discussion of the portions of the transmission.

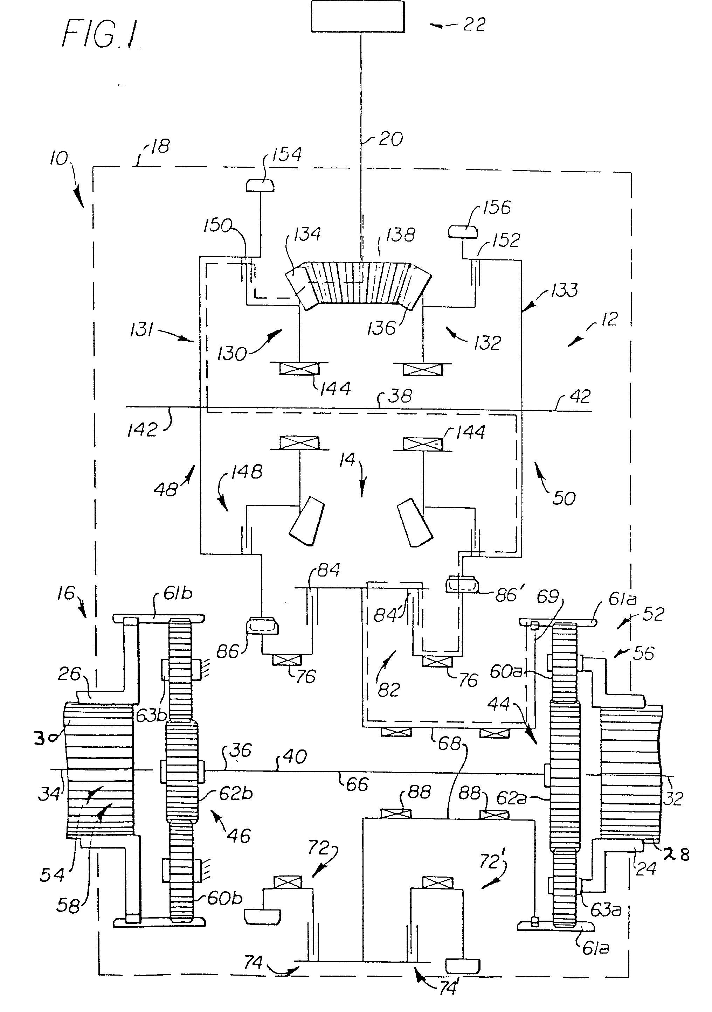

Referring more particularly to Fig. 1, the transmission 10 receives a rotational input through a shaft 20 from a power source 22 and controllably delivers a rotational output through first and second output elements 24,26. The transmission can be located on, for example, a small utility tractor in which the power source is an engine and the first and second output elements are connected or splined to first and second axles 28,30 respectively, which transmit the rotational output of the transmission to wheels of the utility tractor (not shown). Each of said output elements is rotatable about an axis 32,34 for delivering the output of the transmission to said wheels of the tractor.

The first motion transmitting member 12 of the transmission 10 is of a configuration sufficient for initiating driving direction of the transmission through the first and second output elements 24,26. Thus, said first motion transmitting member represents that portion of the transmission which establishes the directional movement of the tractor by determining the rotational direction of the rotational input transmitted through the transmission. In the embodiments shown, said first motion transmitting member controllably selectively initiates one of forward and reverse driving directions of the transmission. Said first motion transmitting member is positioned at a location sufficient for driving said second motion transmitting member 14 in response to receiving the rotational input.

The second motion transmitting member 14 is of a configuration sufficient for controlling output speed of the transmission 10 through the first and second output elements 24,26. Thus, said second motion transmitting member represents that portion of the transmission which controls or through which is selected the driving output speed, such as speed reduction of the rotational input for the transmission 10. The third motion transmitting or differential member 16 is of a configuration sufficient for maintaining differential operation of said transmission and between the first and second output elements. Said third member represents the differential portion of the transmission which, as is known in the art, accommodates the turning of corners by the tractor. The second motion transmitting member is positioned at a location sufficient for driving said third motion transmitting member and said third motion transmitting member drives the first and second output elements of the transmission to provide the rotational output of the transmission.

The transmission 10 includes first and second support members 36,38 each having an axis 40,42 and first and second end portions 44,46;48,50. Each of said support members is carried by the housing 18 and, as shown, is rotatably supported by and relative to the frame of the transmission represented by said housing.

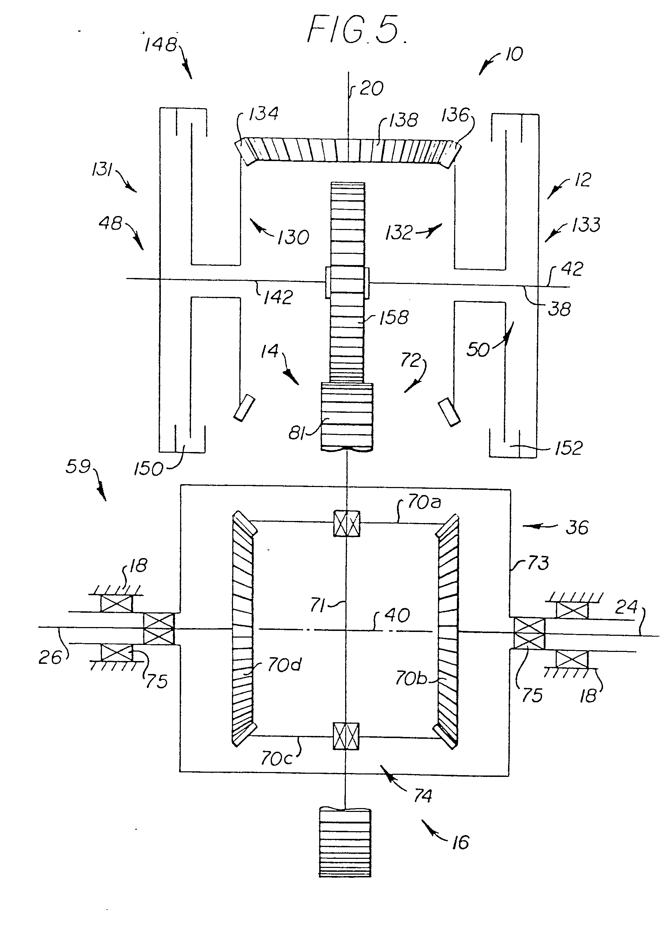

The third motion transmitting member 16 is carried by the first support member 36 and said second motion transmitting member 14 is positioned about and extends longitudinally along the axis 40 of said first support member. In Figs. 1-4, the third motion transmitting member 16 includes first and second differential portions 52,54 which are represented by first and second planetary gear assemblies 56,58, respectively, and carried by and spaced one from the other on the first and second end portions 44,46, respectively, of the first support member 36. Said first and second planetary gear assemblies are shown directly coupled about and along said axis 40 of the first support member 36 and are connected to the first and second output elements 24,26, respectively, for driving said elements. In Fig. 5 the third motion transmitting or differential member is represented by a conventional bevel gear differential 59 also connected to the first and second output elements 24,26.

As will be seen from a study of the drawings, therefore, rotational input through shaft 20 is directed to the first motion transmitting member 12 for initiating or determining the direction of the rotational output of the transmission 10. Said first motion transmitting member drives the second motion transmitting member 14 which controls the output speed of the transmission and also drives the third motion transmitting member 16 which provides for a differential function of the transmission between the first and second output elements 24,26. Each of the three portions of the transmission will now be discussed in detail.

## Differential

As was pointed out above, in the embodiments of Figs. 1-4, the first and second planetary gear assemblies 56,58 provide the differential operation of the transmission 10. Said planetary gear assemblies 56,58

both have planet, ring, sun and carrier elements denoted by a and b, respectively, of reference numerals 60,61,62,63. The first and second end portions 44,46 of the first support member 36 carry said planetary gear assemblies 56,58 by being connected at the first and second end portions 44,46 to the related sun elements 62a;b of the first and second planetary gear assemblies, respectively. The first output element 24 is connected to a respective first one 63a of said ring and carrier elements 61a,63a of the first planetary gear assembly. The remaining one 61a of said ring and carrier elements is connected to the second motion transmitting member 14. The second output element 26 is connected to the one 61b of the elements 61b,63b of the second planetary gear assembly 58 which corresponds to that element 61a of the first planetary gear assembly connected to the second motion transmitting element. The one 63b of the elements 61b,63b corresponding to that element of the first planetary gear assembly connected to the first output element is fixed relative to the housing 18.

The first support member 36 is preferably a shaft 66 rotatable relative to said housing 18 and connected at the first and second end portions 44,46 to the first and second planetary gear assemblies 56,58 respectively. Thus, said shaft supports and rotatably connects the first and second differential portions 52,54 in the preferred embodiment.

The shaft is rotatably supported in a hub 68 of the second motion transmitting member 14, as will be discussed hereinafter, or by the housing 18. The sun elements 62a;b of said planetary gear assemblies 56,58 are shown splined to said shaft for connection of said planetary gear assemblies to the shaft. Further, the first and second output elements 24,26 are connected to the carrier and ring elements 63a,61b respectively, in the examples shown. Said connection between the output elements and the planetary gear assemblies can be, for example, by solid connection or by splined connection. The carrier element 63b can be pressed into the housing to fix said carrier element relative to said housing. As will be discussed below, the input to said differential portion of the transmission is provided from the second motion transmitting member 14 through the hub 68, and a connecting element 69 in Figs. 1, 3, and 4, to the ring element 61a of the first planetary gear assembly 56 of the first differential portion 52.

In the embodiment of Fig. 5, the bevel gear differential 59 has first, second, third and fourth bevel gears denoted by a,b,c,d, respectively, of reference numeral 70. The first and third bevel gears 70a;c are carried by the first support member 36 which also comprises a carrier housing portion 73 of said bevel gear differential. Said first and third gears are positioned about and rotatable relative to a pin 71 which is positioned preferably removably within, and which rotates with, the second support member or carrier. The second and fourth bevel gears 70b;d are preferably splinably connected to the first and second output elements 24,26, respectively, and positioned in mesh with the first and third bevel gears. Bearings 75 support the carrier rotatably relative to the housing 18 and the first and second output elements.

## Speed Selection

With reference now to the portion of the transmission for controlling output speed, the second motion transmitting member 14 includes a motion receiving portion 72 and a motion transferring portion 74. Said motion receiving portion is operable in response to driving force from said first motion transmitting member 12 for receiving rotational input directed to said second motion transmitting member to drive the first and second output elements 24,26 through the third motion transmitting member 16. The motion transferring portion is operable in response to operation of said motion receiving portion.

In the single speed transmission of Fig. 2, said motion transferring and receiving portions 74,72 are preferably portions of a single integral hub 68' of the transmission supported by bearings 76 on the transmission housing 18. Said motion receiving and transferring portions 72,74 are shown as a gear element 78 positioned on said hub 68' and the ring element 61a of the first planetary gear assembly 56.The gear element 78 engages with the first motion transmitting member 12, as will be hereinafter discussed, for providing rotational input to drive the second motion transmitting member 14.

In the single speed transmission of Fig. 5, the motion receiving and motion transferring portions 72,74 are a gear 81, which is connected to the first support member 36 by being positioned on or carried by the carrier 73 of the bevel gear differential 59, and the carrier 73 itself, respectively. Said gear is driven by the first motion transmitting member 12, as will be discussed, to drive the differential by providing rotational motion to the carrier. In the single speed transmissions of Figs. 2 and 5, the second motion transmitting member 14 is not present in the sense that a speed selection is available to an operator of the transmission. Broadly, however, control of output speed of the transmission, as hereinafter described, is still available at the same location of the transmission by preselecting gear ratios during assembly of the transmission.

In the two and four speed embodiments of the transmission, the output speed is selectively controllable through or between distinct speed selections in the transmission. The motion receiving and transferring portions 72,74 are operable rotatably one relative to the other. Said motion transferring portion 74 is connected to the third transmitting member 16 for providing a rotational input to the ring element 61a of the first planetary gear assembly 56.

Referring now to the embodiment of Fig. 1 means 82 is provided for selectively, controllably freeing for rotation and blocking from rotation said motion receiving and transferring portions 72,74 one relative to the other. Said means for freeing and blocking rotation is shown as a clutch 84. Said motion receiving portion is a gear 86 engageable with said first motion transmitting member 12, as will be hereinafter discussed. Said gear is rotatably carried by said housing 18 through bearings 76 similar to the motion receiving portion 72 disclosed in Fig. 2. The hub 68 of the motion transferring portion 74 of Fig. 1 is positioned between the first and second planetary gear assemblies 56,58 and can be rotatably supported in the housing by bearings. Engageable portions of the clutch 84 are located on said hub 68 and the gear 86. Thus, activation of the clutch stops relative movement between the motion transferring and motion receiving portions 74,72 which results in the rotational input from said first motion transmitting member 12 being passed through said second transmitting member 14 to drive the differential or third motion transmitting member 16.

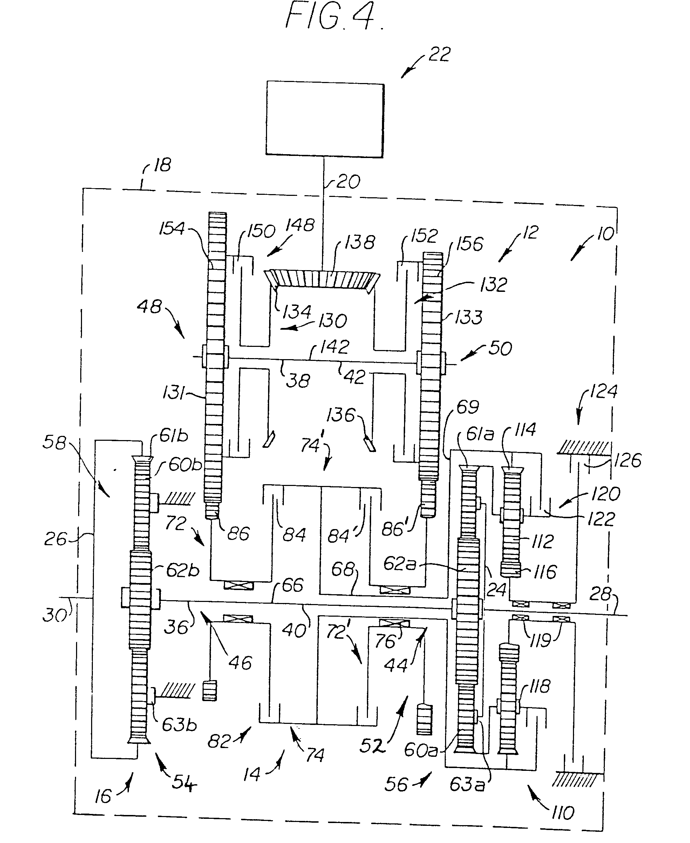

In the embodiments of Figs. 1 and 4, said second motion transmitting member 14 has a second pair

0024100

-13-

of motion receiving and transferring portions 72',74'
and a clutch 84' which are similar to the motion
receiving and transferring portions 72,74 and clutch 84
above described. Activating one of the clutches 84,84'
will engage the integral motion transferring portions
74,74' of hub 68 with the related one of the motion
receiving portions 72,72'. The gear 86 and a gear 86',
which represents the motion receiving portion 72', each
have a preselected gear ratio with respect to the first
motion transmitting member 12. Thus, engaging one of
the clutches to, in effect, lock up one of said gears
86,86' with the hub 68 serves to select a specific
speed or output rotation for the transmission.

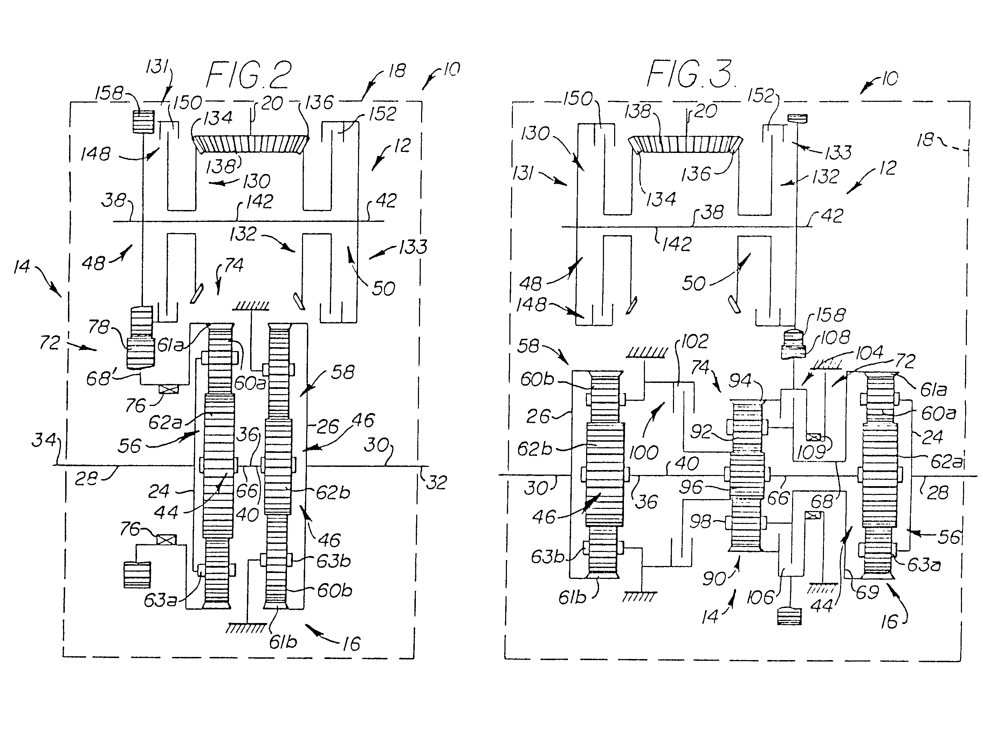

In another embodiment of the two speed transmission, as is disclosed in Fig. 3, the motion transferring portion 74 of the second motion transmitting
member 14 includes a planetary gear assembly 90 which
has planet, ring, sun and carrier 92,94,96,98 elements
and is connected to the third motion transmitting
member 16. Said embodiment includes means 100 for
selectively controllably freeing for rotation and
blocking from rotation relative to the housing 18
preselected elements 98 of said planetary gear assembly
90. Said means 100 is shown as a brake 102. The
motion receiving portion 72 and the ring element 61a
are connected to respective ones 94,98 of said sun,
ring and carrier elements 96,94,98. Means 104 is
provided for establishing rotation of said one 98 of
the elements 94,96,98 of the planetary gear assembly 90
connected to the third motion transmitting member 16
with said motion receiving portion 72. Said means 104
is shown as a clutch 106, engageable portions of which
are on the motion receiving and motion transferring
portions 72,74.

As is shown in Fig. 3, the carrier element 98 and the ring element 61a are interconnected and driven together when the clutch 106 is activated to transfer rotational motion of the motion receiving portion 72 through the clutch 106. Said motion receiving portion is shown as a gear 108 rotatably carried by the housing 18 through a bearing 109. The planetary gear assembly 90 is positioned about the first support member 36 or shaft 66 and between the first and second differential portions 52,54. In the embodiment shown, the sun element 96 of the planetary gear assembly 90 is positioned about said shaft 66 and is rotatable relative to said shaft 66. The sun element 96 is connectable through the clutch 102 to the housing 18 to controllably block or free said sun element for rotation. Therefore, rotational input from the first motion transmitting member 12 through the gear 108 will directly drive the ring gear 61a when said clutch 106 is activated to solidly connect or lock up said portions 72,74 and the brake 102 is deactivated. If said clutch 106 is deactivated and the brake 102 is activated, the rotational input to the gear 108 will pass through the planetary gear assembly 90 resulting in gear reduction through said gear assembly before driving the ring gear 61a from the carrier element 98 of said planetary gear assembly. In this instance, the rotational input from the gear 108 is provided to the ring element 94 which results in rotational output from the carrier element 98 owing to the sun element 96 being blocked from movement by the clutch 102.

With reference now to Fig. 4, an embodiment of a four speed transmission will now be described. The third motion transmitting member 16 is constructed to provide differential operation of the transmission 10 similarly as described above. The second motion transmitting member 14 is also substantially as above described, with the exception of the addition of a secondary planetary gear assembly 110 having planet, ring, sun and carrier elements 112, 114, 116, 118. Thus, for convenience, the reference numerals previously used with reference to the first, the second, and third motion transmitting members will be substantially retained in the four speed transmission.

The secondary planetary gear assembly 110 is connected at a first one 114 of said ring, sun and carrier 114, 116,118 elements to the motion transferring portion 74. The gear assembly is also connected at a second different one 118 of said ring sun and carrier 114,116,118 elements to the one 61a of the elements 61-63a of the first planetary gear assembly 56 which was connected to the motion transferring portion in the two speed embodiments of the transmission. As is shown, the motion transferring portion 74 or hub 68 is connected to the ring element 114 of the secondary planetary gear assembly and first output element 24 is connected to the carrier element 63a. Said carrier element 118 is connected to the ring element 61a of the planetary gear assembly 56. The remaining third one 116 of said elements 114,116,118, the sun element 116, is rotatably carried about the axle 28 by bearings 119.

Means 120 shown as a clutch 122 is provided for selectively, controllably initiating and terminating rotation of said carrier element 118 with said motion transferring portion 74 or hub 68. Means 124, shown as a brake 126, is provided for selectively, controllably freeing for rotation and blocking from rotation the sun element 116 relative to the housing 18. As will be discussed hereinafter, the secondary planetary gear assembly 110 provides an additional two speeds from the basic two speed transmission embodiments by activation of one of the clutch and brake and deactivation of the other of the clutch and brake. It should be understood that such "add on" planetary gear assemblies can be added to various embodiments of the transmission to provide additional speeds as needed or to provide the speed selection functions of the transmission.

Driving Direction

The rotational input from the power source 22 is provided through the shaft 20 to the first motion transmitting member 12. The first motion transmitting member can be controlled to selectively initiate one of forward and reverse driving directions of the transmission 10. This is accomplished through first and second motion receiving and motion transferring portions 130,131;132,133. Said first and second motion receiving portions are shown as first and second bevel gears 134,136 which are positioned in mesh with a third bevel pinion gear 138. Said third bevel gear is splined to the input shaft 20 to deliver the rotational input from the engine to the first motion transmitting member 12.

The first and second bevel gears 134,136 are positioned about and rotatable relative to the second support member 38 which is a shaft 142. Said bevel gears are rotatably supported on said shaft by bearings 144 (Fig. 1). The first and second motion transferring portions 131,133 are positioned about and fixed relative to said shaft adjacent said first and second bevel gears 134,136 respectively. The connections of the motion transferring portions to the shaft can be, for example, by splines.

Means 148, shown as a clutch 150, is provided for controllably, selectively initiating and terminating rotation of said first motion receiving and motion transferring 130,131 portions one with the other. Similarly, a clutch 152 may be activated to control relative rotation between the second motion receiving and motion transferring 132,133 portions. Thus, rotational input from the third bevel gear 138 may be selectively transferred to one of the motion transferring portions 131,133 by activating one of the clutches 150,152. The motion transferring portions of Figs. 1 and 4 are engageable with the related motion receiving portions 72,72' respectively of the second motion transmitting member 14. As is shown, said first and second motion transferring portions each have gear teeth 154,156 which mesh with the respective related gears 86,86' of the second motion transmitting member 14. In Figs. 2, 3 and 5, a single gear 158 is fixed to and rotatable with the shaft 142 for transmitting motion from the motion transferring portions 131;133. Said single gear 158 is positioned in mesh with the related gear element 78 or gears 81,108.

It should be understood that the first, second, and third motion transmitting members and the related elements of the transmission can be of other configurations, as is known in the art, without departing from the invention. For example, friction drive or pulley elements may be used to transfer motion through the transmission. The first and second support members may be of other configurations which accommodate the functions as herein described. The clutches and brakes can be of any configuration known in the art, such as the conventional friction plate type, and may be actuated in any known way, such as electrically, hydraulically or mechanically.

In the use of the transmission 10, a rotational input is provided by the shaft 20 from the engine 22 to drive the first motion transmitting member 12 which in turn drives the second motion transmitting member 14. The second motion transmitting member then drives the third motion transmitting member which is connected to the output elements 24,26 for providing a rotational output to the splined axles 28,30, respectively. The splined axles provide the driving force for rotation of, for example, the wheels of the small utility tractor. Operation of each of the individual embodiments with reference to the schematic representations will now be discussed separately with an explanation of the differential following thereafter.

## Two-Speed

In Figure 1, rotational input from the shaft 20 causes rotation of the third bevel gear 138 which is in mesh with the first and second bevel gears 134,136. Said first and second bevel gears 134,136 thus rotate in response to said rotational input and relative to the shaft 142. As is known in the art, said bevel gears 134,136 will rotate opposite one relative to the other which provides the forward-reverse driving selection for the transmission 10. For example, if forward drive is desired, the clutch 150 may be activated or engaged to (while the other remains or is deactivated), in effect, lock-up or join the first bevel gear 134 and the first motion transferring portion 131. Said motion transferring portion is splined to the shaft 142 which thus causes rotation of the shaft in the same rotational direction as the first bevel gear 134. The second motion transferring portion 133 is also splined to the shaft and rotates in the same direction as the first motion transferring portion. Where reverse drive of the transmission is desired the clutch 152 may be activated or engaged to join the second bevel gear 136 and the second motion transferring portion 133 to cause a rotation of the shaft 142 opposite that of the forward drive selection for the transmission 10. Therefore, rotational motion in both clockwise and counterclockwise directions may be provided regardless of the directional rotation of the input shaft to establish the forward and reverse driving directions of the transmission.

The first and second motion transferring members 131,133 each have gear teeth 154,156 which mesh with the gears 86,86' of the second motion transmitting member 14. Thus, in either the forward or reverse driving directions, as selected by the bevel gears 134,136, both of the gears 86,86' rotate on the bearings 76 when rotational input is provided through the shaft 20. Engagement of a respective clutch 84,84' determines the speed selection of the transmission. As is seen in Fig. 1 and 4, the gears 86,86' each have a different gear ratio with respect to the gear teeth 154,156 of the forward-reverse drive portion of the transmission. Therefore, when rotational input is provided to the transmission for either forward or reverse driving directions, either clutch 84,84' may be engaged to provide rotational input of a preselected speed to the motion transferring members 74,74' which results in rotation of the hub 68 about the shaft 66.

By way of example, low speed forward is indicated in Fig. 1 in heavy broken lines, with relation to the pathway rotational motion takes through the transmission 10 up to the third motion transmitting member 16. Rotational input passes from the input shaft 20 in the third bevel gear 138 to the first bevel gear 134 which rotates relative to the shaft 142. For forward speed, the clutch 150 is activated to controllably impart the rotational movement of the first bevel gear to the first motion transferring portion 131. This establishes the desired rotational direction of the shaft 142 for forward driving direction of the transmission 10. Both of the first and second motion transferring portions 131,133 are thus in rotation in the forward rotational direction for the transmission. Low speed is selected by engaging the clutch 84' which transfers the rotational motion from the gear 86' to the hub 68 in that said gear 86' is in rotation owing to its being in mesh with the gear teeth 156 associated with said second motion transferring portion 133.

With reference to Fig. 3, the forward-reverse selection of the transmission similarly is established through rotation of the shaft 142 by activation of either one of the clutches 150,152 with the other being deactivated. However, the motion transferring portions 131,133, which determined the forward and reverse rotations, drive the second motion transmitting member 14 through the single gear 158 which is connected directly to said second motion transferring portion 133 and to said first motion transferring portion 131 through the shaft 142. Said gear provides a single rotational input to the gear 108 for use with the planetary gear speed selection of the embodiment of Fig. 3.

Selection of one of the two speeds for the transmission 10 in Fig. 3 depends upon whether the rotational input from said single gear 158 passes through the planetary gear assembly 90 or is directly transmitted to the third motion transmitting member 16. For example, if clutch 106 is activated and clutch 102 is deactivated, it will be apparent that the rotational input of gear 158 passes directly through the engaged clutch 106 and the hub 68 to the ring element 61a of the first planetary gear assembly 56. Thus, the speed established in the transmission is determined by the gear ratio of the gear 158 and the gear 108. To choose the second different speed, the clutch 106 is deactivated and the clutch 102 is activated. Activation of the clutch 102 fixes the sun gear and deactivation of the clutch 106 provides rotational input to the ring element 94 of said secondary planetary gear assembly 110. This causes the rotational input to pass through the planetary gear assembly 90 with a corresponding related change in rotational output from the carrier element 98 to the ring element 61a. The first and second planetary assemblies 56,58 are thus driven at a different (typically lower) speed relative to the speed achieved directly from the gear 108 through the clutch 106 to the ring element 61a.

## Four-Speed

Referring to Fig. 4, the embodiment of the four-speed transmission disclosed is of a similar construction to that of the two-speed transmission of Fig. 1. The forward and reverse drive selection and the initial speed selection of the speeds through the clutches 84,84' is similar to that disclosed with respect to Fig. 1. Activation of either one of the clutches 84,84', as was discussed, determines first and second speeds of rotation of the hub 68 which is connected to the ring element 114 of the second planetary gear assembly 110. Depending upon the path of rotational movement relative to the secondary planetary gear assembly 110, this provides two of the speeds of the transmission. The other two speeds of the transmission will be established from said basic two speeds.

In order to establish the low, low speed of the transmission 10 (where the secondary planetary gear assembly 110 provides a gear reduction), the clutch 126

BAD ORIGINAL

is engaged to block sun element 116 from rotation and the clutch 122 is disengaged to provide rotational input from the hub 68 only to the ring element 114 of the secondary planetary gear assembly 110. Thus, the relationship of the elements of the second planetary gear assembly establish the speed or rotational output of the carrier element 118 which is connected to the ring element 61a of the first planetary gear assembly 56. In this manner, for example, speed reduction can be accomplished by passing the rotational input through the secondary planetary gear assembly and to the differential portion of the transmission. If low, high speed is desired the clutch 122 is engaged and the clutch 126 is disengaged, which frees the sun element 116 for rotation relative to the housing. Rotational input is thus delivered to the second planetary gear assembly at both the ring and carrier elements 114,118, which provides, in effect, a direct drive through the second planetary gear assembly to the ring element 61a. High, low and high, high speeds may similarly be selected for the transmission as desired by first engaging clutch 84 and disengaging clutch 84'.

### Single Speed

With reference to Figs. 2 and 5, a single speed embodiment of the transmission 10 is disclosed. The single speed transmission has a forward and reverse driving selection substantially similar to the one disclosed in Fig. 4. Rotational input in the forward and reverse driving directions is provided from the gear 158 to the first gear element 78 (Fig. 2) or the gear 81 (Fig. 5). The output speed of the transmission is determined by the relationship of the gear 158 and the first gear element 78 or gear 81. The single speed transmission, therefore, has forward and reverse

-23-

driving selection and a single speed determined in driving from the first motion transmitting member 12 to the differential member 16.

## Differential

Differential operation between the first and second planetary gear assemblies 56,58 of Figs. 1-4 will now be described with respect to said rotational motion being provided to the ring element 61a.

With reference to Figs. 1-4, rotational input from the hub 68 is directed to the ring element 61a of the first planetary gear assembly 56 which causes said planetary gear assembly to rotatably act about the shaft 66. Rotational output to the first axle 28 is taken from the carrier element 63a through the first output element 24. The second planetary gear assembly 58 receives rotational input from the sun element 62a through the shaft 66 to the sun element 62b of said second planetary gear assembly. Rotational input from the hub 68 is thus passed through the first planetary gear assembly to the second planetary gear assembly to provide an output from the ring element 61b and the output element 26 to the axle 30. In said second planetary gear assembly, the carrier element 63b is fixed relative to the housing to provide the proper rotational relationship between said first and second planetary gear assemblies.

It will be readily apparent to one skilled in the art that the first and second planetary gear assemblies 56,58 must be of such a relationship that the rotational input provided from the hub 68 will be transmitted through each of said planetary gear assemblies to provide a common rotational orientation and speed of the first and second output elements 24,26 in order to drive both of the axles 28,30 simultaneously in the same direction and speed. A certain amount of gear reduction can also be taken in said planetary gear assemblies in the embodiments shown. Such planetary relationships can be readily calculated by one skilled in the art through comparison of the relationships of the gears in the transmission.

In differential operation of the transmission 10, the relationship with the first and second planetary gear assemblies 56,58 will briefly be discussed. For example, assume that the axle 28 substantially ceases to rotate owing to the tractor turning a corner about a wheel associated with said axle. If the axle 28 is substantially stopped from rotation, the first output element 24 is similarly stopped, as is the carrier element 63a of the first planetary gear assembly 56. This causes a proportionally faster rotation of the planet elements 60a of said first planetary gear assembly owing to the continued action of the rotational input on the ring element 61a. The result is a faster rotation of the sun element 62a and the interconnected shaft 66 and sun element 62b of the second planetary gear assembly 58. This faster rotation tends to correspondingly cause faster rotation of the planet elements 60b to increase the rotational speed through the ring element 61b to the second output element 26 and the axle 30, which provides a differential action between the two wheels of the tractor. Similarly, differential action will be provided between the two wheels if the wheel associated with the second axle 30 is substantially stopped from rotation when the vehicle turns a corner about said wheel.

With reference now to Fig. 5, a rotational input is provided to the bevel gear differential 59 by driving the carrier 73 through the rotating gear 158 which meshes with the gear 81 connected to the carrier.

This tends to rotate the first and third bevel gears 70a;c about the axis 40 to drive the first and second output elements 24,26 at substantially equal torques and speeds through the second and fourth bevel gears 70b;d positioned in mesh with said first and third bevel gears. Differential operation is accomplished if, for example, the second output element 26 substantially ceases to rotate and by such action also tends to block the fourth bevel gear 70d from rotation. This results in rotation of the first and third bevel gears 70a;c about the pin 71 and relative to said fourth bevel gear which in turn speeds up the rotation of the second bevel gear 70b in response to continued rotation of the first and third bevel gears about the axis 40 of the carrier. Thus, the rotation of the second bevel gear relative to the fourth bevel gear also creates a differential action between the wheels of the associated vehicle.

Positioning the differential and speed control portions of the transmission relative to the single support member 36 provides versatile use of the transmission as a compact and economical package. The transmission also provides for additional add on speeds or different types of speed reduction, for example, to further adapt the transmission to a variety of applications. This compact arrangement, in association with small vehicles particularly, will maximize useage of available space and provide a lightweight transmission for such vehicles. The result is to substantially solve many of the problems associated with the necessity of positioning a transmission in a small space.

- 26 -

## CLAIMS.

1.    A transmission (10) for receiving a rotational input and controllably delivering a rotational output through first and second output elements (24,26), the transmission (10) comprising a housing (18) having a first  motion transmitting member (12) for controlling driving direction of the transmission output, a second motion transmitting member (14) for controlling output speed of the transmission (10), and a third motion transmitting member (16) for allowing differential operation of the transmission (10), characterised in that the transmission further comprises a first support member (36) having an axis (40) and being carried by the housing (18),    the first motion transmitting member (12) being arranged to drive, in use, the second motion transmitting member (14) in response to receiving a rotational input, the third motion transmitting member (16) being carried by the first support member (36) and being arranged,in use, to transmit a rotational output to the first and second output elements (24, 26) and to allow differential rotation between the first and second output elements (24, 26); and the second motion transmitting member (14) being positioned about the axis (40) of the first support member (36) to drive, in use, the third motion transmitting member (16).

2.    A transmission (10) according to claim 1, characterised in that the third motion transmitting member (16) comprises first and second differential portions (52, 54) carried by the first support member (36) which is rotatable relative to the housing (18), the first and second differential portions being connected one to the other only through the first support member (36).

3. A transmission (10) according to claim 2, characterised in that the second motion transmitting member (14) is positioned generally between the first and second differential portions (52,54).

4. A transmission (10) according to claim 2 or claim 3, characterised in that second motion transmitting member (14) directly drives the first differential portion (52).

5. A transmission (10) according to any of claims 2 to 4, characterised in that the first and second differential portions (52,54) comprise first and second planetary gear assemblies (56,58) respectively.

6. A transmission (10) according to claim 5, characterised in that the sun element (62$\underline{a}$, 62$\underline{b}$) of each planetary gear assembly (56,58) is connected non-rotatably to the first support member (36).

7. A transmission (10) according to claim 6, characterised in that the first output element (24) is connected to a respective first one (63$\underline{a}$) of the ring and carrier elements (61$\underline{a}$, 63$\underline{a}$) of the first planetary gear assembly (56), and the other one (61$\underline{a}$) of the ring and carrier elements (61$\underline{a}$, 63$\underline{a}$) of the first planetary gear assembly (56) is connected to the second motion transmitting member (14).

8. A transmission (10) according to any of the preceding claims, characterised in that the second motion transmitting member (16) is carried coaxially about the first support member (36).

9.    A transmission (10) according to any of the preceding claims, characterised in that the second motion transmitting member (14) comprises a motion receiving portion (72) operable in response to driving force from the first motion transmitting member (12); and a motion transferring portion (74) operable in response to operation of the motion receiving portion (72), the motion receiving (72) and motion transferring (74) portions being rotatable one relative to the other, the motion transferring portion (74) being connected to the third motion transmitting member (16), and the second motion transmitting member including means (82) for selectively, controllably freeing for rotation and blocking from rotation the motion receiving and transferring portions (72, 74) one with the other.

10.    A transmission (10) according to claim 9, when dependant on at least claim 2, characterised in that the motion receiving portion (72) is a gear (86,108) engageable with the first motion transitting member (12) and rotatably carried by the housing (18); and the motion transferring portion (74) has a hub (68) positioned about and rotatable relative to the first support member (36) and between the first and second differential portions (52,54).

11.    A transmission (10) according to claim 9 or claim 10, characterised in that the motion transferring portion (74) comprises a third planetary gear assembly (90) having sun, ring, planet and carrier elements (92,94,96,98) and is connected to the third motion transmitting member (16); and means (100) for selectively, controllably freeing for rotation and blocking from rotation relative to the housing (18) a preselected one (96) of the ring, sun and carrier elements (94,96,98)of the third planetary gear assembly (90).

12. A transmission (10) according to claim 11, characterised in that the motion receiving portion (72) and the third motion transmitting member (16) are connected each to a selected one (94,98) of the sun, ring and carrier elements (94,96,98) of the third planetary gear assembly (90), the motion receiving portion (72) being rotatably operable, and the second motion transmitting member including means for controllably, selectively initiating and terminating rotation of the one (98) of the elements (94,96,98) of the third planetary gear assembly (90) connected to the third transmitting member (16) with the motion receiving portion (72).

13. A transmission (10) according to any of claims 1 to 10, characterised in that the second motion transmitting member (14) comprises a fourth planetary gear assembly (110) having planet, ring sun and carrier elements (112,114,116,118).

14. A transmission (10) according to claim 13, when dependant on claims 7 and 9; characterised in that a first one (114) of the ring sun and carrier elements (114,116,118) of the fourth planetary gear assembly (110) is connected to the motion transferring portion (74) and a second different one (118) of the ring, sun and carrier elements (114,116,118) is connected to the other one (61a) of the first planetary gear assembly (56) of the first differential portion (52).

15.     A transmission (10) according to claim 14,
characterised in that the second motion transmitting
member (14) comprises means (120) for selectively,
controllably initiating and terminating rotation of
the motion transferring portion (74) relative to the
second one (118) of the elements (114,116,118) of the
fourth planetary gear assembly (110); and means (124)
for selectively, controllably freeing for rotation and
blocking from rotation the remaining third one (116) of
the ring, sun and carrier elements (114,116,118) of
the fourth planetary gear assembly (110) relative to the
housing (18).

16.     A transmission (10) according to any of claims
13 to 15, characterised in that the sun element (116)
of the fourth planetary gear assembly (120) is positioned
about and is rotatable relative to the first output
element (24).

17.     A transmission (10) according to claim 9,
characterised in that the second motion transmitting
member (12) comprises a gear (78,81) mounted about the
first support member (36).

18.     A transmission (10) according to claim 17,
characterised in that the third motion transmitting
member (16) is a bevel gear differential (59) having
first, second, third and fourth bevel gears (70a,b,c,d,),
the first and third bevel gears (70a,c) being carried
by the first support member (36) and positioned in
mesh with the second and fourth bevel gears (70b,d),
the second and fourth bevel gears (70b,d) being
connected to the first and second output elements (24,
26) respectively, and the second motion transmitting
member being connected to the first and third bevel
gears (70a,c).

19.     A transmissión (10) according to any of the preceding claims, characterised in that the transmission further comprises a second support member (38) carried by the housing (18), the first motion transmitting member (12) being carried by the second support member (38) and having a first motion receiving portion (130) positioned about and rotatable relative to the second support member (38) in response to a rotational input; and a first motion transferring portion (131) positioned about and mounted non-rotatably to the second support member (38) and engaging the second motion transmitting member (14), the first motion transmitting member (12) further including means (148) for controllably, selectively initiating and terminating rotation of the first motion receiving (130) and motion transferring (131) portions of the first motion transmitting member one with the other.

20. A transmission (10) according to claim 19, characterised in that the first motion transmitting member (12) further comprises a second motion receiving portion (132) positioned about and rotatable relative to the second support member (38) in response to a rotational input and a second motion transferring portion (133) positioned about and mounted non-rotatably to the second support member (38) and engaging the second motion transmitting member (14), the rotation initiating and terminating means (148) being operable controllably and selectively to initiate rotation of one of the first and second motion receiving portions (130, 132) with the related respective one of the first and second motion transferring portions (131, 133), and to terminate rotation of the other of the first and second motion receiving portions (132, 130) with the related respective one of the first and second motion transferring portions (133, 131) for initiating one of forward and reverse driving directions of the transmission (10).

FIG.1

FIG.2

FIG.3.

2/4

0024100

# FIG.4.

## FIG.5.